(19) Europäisches Patentamt
European Patent Office
Office européen des brevets

(11) EP 2 476 605 B1

(12) **EUROPEAN PATENT SPECIFICATION**

(45) Date of publication and mention of the grant of the patent:
**06.04.2016 Bulletin 2016/14**

(51) Int Cl.:
***B62H 7/00*** *(2006.01)* ***B62J 7/00*** *(2006.01)*

(21) Application number: **12151427.7**

(22) Date of filing: **17.01.2012**

(54) **Two-wheel vehicle, attitude stabilizing apparatus, and attitude stabilizing method**

Zweirädriges Fahrzeug, Lagestabilisierungsvorrichtung und Lagestabilisierungsverfahren

Véhicule à deux roues, appareil de stabilisation d’attitude et procédé de stabilisation d’attitude

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2011 JP 2011008154**

(43) Date of publication of application:
**18.07.2012 Bulletin 2012/29**

(73) Proprietor: **Denso Corporation**
**Kariya-city**
**Aichi 448-8661 (JP)**

(72) Inventors:
- **Chiba, Kunihiko**
  **Kariya-city,, Aichi 448-8661 (JP)**
- **Mori, Katsuyuki**
  **Kariya-city,, Aichi 448-8661 (JP)**

(74) Representative: **TBK**
**Bavariaring 4-6**
**80336 München (DE)**

(56) References cited:
**WO-A1-2010/023668**
**DE-A1-102008 021 523**
**DE-A1-102010 003 951**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 476 605 B1

## Description

The present invention relates to a two-wheel vehicle, an attitude stabilizing apparatus and an attitude stabilizing method for stabilizing an attitude of the two-wheel vehicle to reduce a rolling of the two-wheel vehicle.

A technique disclosed in JP-A-H07-215258 teaches a system for reducing a rolling of a two-wheel vehicle such that a tilt angle as a rolling angle of a body of the two-wheel vehicle is detected, and a steering wheel is automatically controlled according to the tilt angle in order to reduce the rolling of the two-wheel vehicle. Here, the steering wheel is not a handle of the bicycle but a wheel connected to the handle so that the steering wheel defines a traveling direction of the bicycle.

However, since the steering wheel is automatically controlled in the above technique, a driver may feel strangeness when the steering wheel is controlled against the driver's intention.

Further, when the tilt angle of the body is detected, the steering wheel is automatically controlled to cancel the tilt angle. Thus, when the vehicle turns with maintaining a certain tilt angle, i.e., when the vehicle curves around a circle having a constant diameter, the driver can not maintain the tilt angle. Therefore, the driver may feel unpleasant sensation.

Furthermore, document WO 2010/023668 A1, according to the preamble of claim 1, 6 and 7, discloses a system for stabilizing a single-track vehicle, comprising a controller including an inner loop which closes on a roll angular rate of a rear assembly and reduces parametric uncertainty associated with said vehicle, and an outer loop which closes on a roll angle of said rear assembly, and wherein the controller outputs a steering torque signal for controlling a steering angle in a front assembly.

In view of the above-described problem, it is an object of the present disclosure to provide a two-wheel vehicle with reducing a rolling of the vehicle. Unpleasant sensation of a driver of the vehicle is restricted. Further, it is another object of the present disclosure to provide an attitude stabilizing apparatus for stabilizing an attitude of a two-wheel vehicle to reduce a rolling of the two-wheel vehicle with restricting unpleasant sensation of a driver. It is another object of the present disclosure to provide an attitude stabilizing method for stabilizing an attitude of a two-wheel vehicle to reduce a rolling of the two-wheel vehicle with restricting unpleasant sensation of a driver.

According to a first aspect of the present disclosure, a two-wheel vehicle having two wheels, which are arranged along with a traveling direction, and capable of turning around a turning center by tilting a body of the two-wheel vehicle toward the turning center, includes: an operation amount detector for detecting an operation amount of a driver, which is applied to the body; a target rolling angle determination device for determining a target rolling angle based on at least the operation amount; an actual rolling angle detector for detecting an actual rolling angle of the two-wheel vehicle; a torque generator for generating a torque, which is applied to at least one of the two wheels; and a controller for controlling the torque generator to generate the torque for reducing an absolute value of a difference between the target rolling angle and the actual rolling angle.

In the above vehicle, since the controller controls the actual torque based on the difference between the target rolling angle reflecting the intention of the driver and the actual rolling angle, unpleasant sensation of the driver is restricted. Further, the wobbling of the vehicle is reduced.

According to a second aspect of the present disclosure, an attitude stabilizing apparatus for stabilizing an attitude of a two-wheel vehicle having two wheels, which are arranged along with a traveling direction, and capable of turning around a turning center by tilting a body of the two-wheel vehicle toward the turning center, includes: an operation amount detector for detecting an operation amount of a driver, which is applied to the body; a target rolling angle determination device for determining a target rolling angle based on at least the operation amount; an actual rolling angle detector for detecting an actual rolling angle; a torque generator for generating a torque, which is applied to at least one of the two wheels; and a controller for controlling the torque generator to generate the torque for reducing an absolute value of a difference between the target rolling angle and the actual rolling angle.

In the above apparatus, the unpleasant sensation of the driver is restricted, and the wobbling of the vehicle is reduced.

According to a third aspect of the present disclosure, a control method for stabilizing an attitude of a two-wheel vehicle having two wheels, which are arranged along with a traveling direction, and capable of turning around a turning center by tilting a body of the two-wheel vehicle toward the turning center, includes: detecting an operation amount of a driver, which is applied to a body of the two-wheel vehicle; determining a target rolling angle based on at least the operation amount; detecting an actual rolling angle; generating a torque, which is applied to at least one of the two wheels; and controlling the torque to reduce an absolute value of a difference between the target rolling angle and the actual rolling angle.

In the above method, the unpleasant sensation of the driver is restricted, and the wobbling of the vehicle is reduced.

The above and other objects, features and advantages of the present invention will become more apparent from the following detailed description made with reference to the accompanying drawings. In the drawings:

Fig. 1 is a block diagram showing an attitude stabilizing apparatus for stabilizing an attitude of a two-wheel vehicle according to a first embodiment;
Fig. 2 is a diagram showing the two-wheel vehicle, on which the attitude stabilizing apparatus is mounted;
Fig. 3 is a diagram showing a moment and a force applied to the vehicle;
Fig. 4 is diagram showing a moment and a force applied to the vehicle;
Fig. 5 is a diagram showing a target yaw rate calculation map;
Fig. 6 is a diagram showing a control process of an electric motor;
Fig. 7 is a flowchart showing an operation of the attitude stabilizing apparatus according to the first embodiment;
Figs. 8A to 8C are diagrams showing various convergence time setting switches;
Fig. 9 is a flowchart showing an operation of the attitude stabilizing apparatus according to a second embodiment;
Fig. 10 is a diagram showing a target torque setting switch;
Fig. 11 is a flowchart showing an operation of the attitude stabilizing apparatus according to a third embodiment;
Figs. 12A and 12B are diagrams showing various target torque setting switches;
Fig. 13 is a flowchart showing an operation of the attitude stabilizing apparatus according to a fourth embodiment;
Fig. 14 is a flowchart showing an operation of the attitude stabilizing apparatus according to a fifth embodiment.

(First embodiment)

A two-wheel vehicle according to a first embodiment is a bicycle having no driving power source such as a power engine and a motor. The bicycle includes an attitude stabilizing apparatus for stabilizing an attitude of a two-wheel vehicle.

1. An attitude stabilizing apparatus and a bicycle having an attitude stabilizing apparatus

As shown in Fig. 2, a bicycle 3 has a front wheel 3A for steering with a driver as a rider. Further, the bicycle 3 has a rear wheel 3B as a driving wheel for applying a driving force to a surface of a road. The driver directly steers or controls the front wheel 3A via a handle 3C of the bicycle. When the rider pedals the bicycle, the driving force is generated via a crank pedal. Then, the driving force is transmitted from the crank pedal to the rear wheel 3B via a power transmission element such as a chain and a shaft.

2. An attitude stabilizing apparatus for a bicycle

As shown in Fig. 1, detection signals from a steering wheel angle sensor 7, a vehicle speed sensor and a vehicle body rolling angular speed sensor 11 are input into an electric control unit (i.e., ECU) 5. Here, the steering wheel is not a handle of the bicycle but a wheel connected to the handle so that the steering wheel defines a traveling direction of the bicycle. The steering wheel angle sensor 7 detects a steering wheel angle θs of the front wheel 3A, i.e., an operation amount of the handle 3C by the rider. The vehicle speed sensor 9 detects the vehicle speed V of the bicycle 3. The vehicle body rolling angular speed sensor 11 detects a changing rate (i.e., a rolling angular speed dθr) of a rolling angle θr of the bicycle 3.

The ECU 5 includes a conventional micro computer having a CPU, a RAM, a Rom and the like. The ECU 5 a target yaw rate calculation unit 5A, a target rolling angle calculation unit 5B, an actual rolling angle calculation unit 5C, and a target rolling angular speed calculation unit 5D. The target yaw rate calculation unit 5A calculates a target yaw rate as a target yaw angle speed ω. The target rolling angle calculation unit 5B calculates a target rolling angle θr0. The actual rolling angle calculation unit 5C calculates a current rolling angle θr of the bicycle 3. The target rolling angular speed calculation unit 5D calculates a target rolling angular speed dθr0.

In the present embodiment, the units 5A-5D are provided by a program stored in a non-volatile memory such as a ROM. Alternatively, the units 5A-5D may be provided by a hard ware such as a dedicated LSI.

The actual rolling angle calculation unit 5C integrates a detection signal corresponding to the rolling angular speed dθr output from the vehicle body rolling angular speed sensor 11 so that the current rolling angle θr of the bicycle 3 is calculated. Here, the current rolling angle θr corresponds to an actual rolling angle θr.

Here, the actual rolling angle θr is defined as a tilt angle of the bicycle 3 with respect to a vertical direction. Specifically, as shown in Fig. 3, the actual rolling angle θr is an angle between a vertical virtual line L1 and a rolling virtual line L2. The vertical virtual line L1 passes through a contact portion between the rear wheel 3B and a surface of a road. The rolling virtual line L2 passes through the contact portion and a gravity center G of the bicycle 3.

The target yaw rate calculation unit 5A calculates the target yaw rate ω based on the steering wheel angle θs detected by the steering wheel angle sensor 7, the vehicle speed V detected by the vehicle speed sensor 9 and a target yaw rate calculation map. The target yaw rate calculation map is shown in Fig. 5, and represents a relationship among the steering wheel angei θs, the vehicle speed V and the target yaw rate ω. The target yaw rate calculation map is stored in the ROM.

A content of the target yaw rate calculation map is determined by experiments and deliberation, which are preliminary executed. The target yaw rate calculation map represents a function with regard to the steering wheel angel θs and the vehicle speed V. The function is defined as "$\omega = f(\theta s, V)$."

The target rolling angle calculation unit 5B calculates the target rolling angle θr0 based on an equilibrium condition between a first rolling moment M1 generated by gravity applied to a body of the bicycle 3 and a second rolling moment M2 calculated from the target yaw rate ω and the sped V of the bicycle 3.

Here, the first rolling moment M1 and the second rolling moment M2 are defined as follows.

$$M1 = M \times g \times L \times \sin(\theta r)$$

$$M2 = M \times V \times \omega \times L \times \cos(\theta r)$$

As described later, it is necessary to equalize the first rolling moment M1 and the second rolling moment M2 (i.e., M1 = M2) for stabilization of the bicycle 3. Thus, the following equation should be satisfied.

$$\tan(\theta r) = V \times \omega / g$$

Accordingly, the target rolling angle calculation unit 5B calculates the target rolling angle ωr0 to satisfy the above equation. Thus, the target rolling angle ωr0 is obtained as follows.

$$\theta r0 = \arctan(V \times \omega / g)$$

The target rolling angular speed calculation unit 5D calculates the target rolling angular speed dθr0 by dividing a value Δθr with convergence time Tc. Here, the value Δθr is calculated by subtracting the target rolling angle θr0 from the actual rolling angle θr at the present time. Accordingly, the target rolling angular speed dθr0 is obtained as follows.

$$d\theta r0 = \Delta\theta r / Tr$$

$$\Delta\theta r = \theta r - \theta r0$$

Accordingly, in the present embodiment, when the target rolling angular speed dθr0 is positive, the actual rolling angle θr increases. When the target rolling angular speed dθr0 is negative, the actual rolling angle θr decreases so that the bicycle 3 approaches to the neutral position. When the target rolling angular speed dθr0 is zero, the actual rolling angle θr maintains.

When the bicycle 3 goes forward, and the target rolling angular speed dθr0 is positive, it is necessary to control the electric motor 15 to generate a torque for going backward.

When the bicycle 3 goes forward, and the target rolling angular speed dθr0 is negative, it is necessary to control the electric motor 15 to generate a torque for going forward. When an absolute value of the torque is large, the actual rolling angle θr reaches the target rolling angle ωr0 within comparatively short time.

Here, the convergence time Tc is target time so that the attitude of the bicycle 3 is changed from a position at which the bicycle 3 has the current rolling angle θr to a position at which the bicycle 3 has th target rolling angle θr0. When the convergence time Tc is short, the attitude of the bicycle 3 is changed within a short time. In the present embodiment, the convergence time Tc is preliminary set to be a constant value.

In Fig. 1, the driving control unit as a power control unit (i.e., PCU) 13 controls a torque to be generated at the electric motor 15, which is mounted in a hub of the front wheel 3A. The PCU 13 includes a target driving torque calculation unit 13A and a motor driving circuit 13B. The target driving torque calculation unit 13A calculates a torque to be generated at the electric motor 15. The motor driving circuit 13B adjusts an applied voltage and flowing current to the electric motor 15 so as to approach the target torque Tr, which is calculated at the target driving torque calculation unit 13A.

Here, as shown in Fig. 6, the PCU 13 controls the electric motor 15 based on the target torque Tr, which is calculated by the PID control method according to a difference between the target rolling angular speed dθr0 and the actual rolling angular speed dθr detected by the vehicle body rolling angular speed sensor 11, so that the actual rolling angular speed dθr reaches the target rolling angular speed dθr0.

As shown in Fig. 2, the ECU 5 and the PCU 13 are accommodated in a casing as a control box 17. The control box 17 is assembled at a certain portion of the bicycle 3, for example, near the handle 3C. The control box 17 is stably mounted on the bicycle 3. A battery for energizing the ECU 5 and the PCU 13 is assembled at a certain position of the bicycle 3 under a saddle 3D so that the certain position is disposed near a gravity center of the bicycle 3.

3. Operation of an attitude stabilizing apparatus for a bicycle

The attitude stabilizing apparatus 1 for the bicycle 3 is activated when the rider turns on an activation switch (not shown). When the rider turns off the switch, the apparatus 1 stops functioning. An operation control program for the apparatus 1 provides a control flowchart in Fig. 7, and is stored in a non-volatile memory such as a ROM.

When the rider turns on the activations witch, in step S1, the apparatus 1 detects and calculates the steering wheel angel θs, the vehicle speed V, the actual rolling angle θr, and the actual rolling angular speed dθr. Then, the apparatus 1 determines in step S3 whether the vehicle speed V is larger than 0 km/h, and further, the steering wheel angel θs on a right side or a left side is larger than 0 degree.

At this time, when the apparatus 1 determines that the vehicle speed V is 0 km/h, or the steering wheel angel θs on a right side or a left side is 0 degree, i.e., when the determination in step S3 is "NO," it returns to step S1. When the apparatus 1 determines that the vehicle speed V is larger than 0 km/h, and further, the steering wheel angel θs on a right side or a left side is larger than 0 degree, i.e., when the determination in step S3 is "YES," it goes to step S5. In steps S5 to S9, the target yaw rate ω, the target rolling angle θr0, the target rolling angular speed dθr0 are calculated. Then, in step S11, the target torque Tr is calculated.

Next, in step S13, the apparatus 1 determines whether the target torque Tr calculated in step S11 is equal to or smaller than an upper limit torque (i.e., an instruction torque). The electric motor 15 can generate the upper limit torque at maximum. When the apparatus 1 determines that the target torque Tr is larger than the upper limit torque, i.e., when the determination in step S13 is "NO," it returns to step S1. When the apparatus 1 determines that the target torque Tr is equal to or smaller than the upper limit torque, i.e., when the determination in step S13 is "YES," it goes to step S15. In step S15, the electric motor 15 is controlled to generate the target torque Tr.

4. Features of an attitude stabilizing apparatus for a bicycle

The attitude of the bicycle 3 is stabilized when a rolling moment caused by the gravity applied to the bicycle 3 including the gravity applied to the rider is balanced to a rolling moment caused by a centrifugal force, which is an inertial force with respect to a centripetal force.

The rolling moment caused by the gravity is a moment generated in a case where the bicycle 3 rolls or wobbles. The magnitude of the rolling moment is mainly determined by the speed V of the bicycle 3 under a condition that the bicycle 3 rolls.

Thus, in the present embodiment, the target rolling angle θr0 is determined, and then, the torque to be generated at the front wheel 3A is controlled to reduce an absolute value of a difference between the target rolling angle ωr0 and the actual rolling angle θr. Thus, a total rolling moment reaches zero so that the rolling motion of the bicycle 3 is restricted.

At that time, since the target rolling angle θr0 is determined based on at least the steering wheel angel θs, the intention of the rider is reflected on the determination of the target rolling angle θr0. Accordingly, in the present embodiment, since the torque to be generated at the front wheel 3A is controlled based on the difference between the target rolling angle θr0 reflecting the intention of the rider and the actual rolling angle θr, the strangeness of the rider is reduced, and the rolling of the bicycle 3 is reduced.

Further, in the present embodiment, the target rolling angle θr0 is calculated according to the steering wheel angel θs, and the steering wheel angel θs is a parameter, which largely reflects the intention of the rider. Thus, the strangeness of the rider is much reduced.

In the present embodiment, the torque to be generated at the font wheel 3A is controlled, so that the actual rolling angle θr is changed. Thus, the attitude of the bicycle 3 is stabilized. Alternatively, the torque to be generated at the rear wheel 3B may be controlled, so that the actual rolling angle θr is changed. Thus, the attitude of the bicycle 3 is stabilized.

In the above case, when the torque to be generated at the rear wheel 3B is controlled, the vehicle speed V increases or decreases so that the centrifugal force is reduced or increased. Thus, the magnitude of the rolling moment M2 is controlled. Thus, in a case where the weight of the bicycle 3 is large, even when the torque to be generated at the rear wheel 3B is changed, the rolling moment M2 is not changed rapidly.

Accordingly, when the torque to be generated at the rear wheel 3B is controlled, the actual rolling angle θr does not become the target rolling angle θr0 within the convergence time Tc after the ECU 5 outputs an instruction for changing the torque. Specifically, the responsibility is low.

Contrary, for example, when the bicycle 3 has been rolling, the steering wheel angle of the front wheel 3A is larger than zero. Thus, under this condition, when the torque of the front wheel 3A is changed, the change of the torque directly generates a new rolling moment other than the rolling moment caused by the centrifugal force.

Specifically, for example, when the target torque Tr directing to the front is generated at the front wheel 3A, the front wheel 3A pushes the road surface backwardly. As shown in Fig. 3, thus, the front wheel 3A receives force F1 toward the front from the road surface as reaction force.

In the above case, since the front wheel 3A is steered, and tilted on a rotation center side with respect to the traveling direction, a component of the force F1 along with a radial direction of the rotation circle defined as second force F2 is applied to the front wheel 3A. Here, $F2 = F1 \sin \theta s$. Thus, the moment M3 is generated such that the moment M3 has a center near a head pipe 3E of the front fork.

Accordingly, when the torque for executing the attitude control of the front wheel 3A is generated, the torque from the electric motor 15 is converted effectively to the rolling moment for changing the rolling angle θr of the bicycle 3. Here, the torque for executing the attitude control of the front wheel 3A is defined as an attitude control torque. Thus, the responsibility of the attitude stabilizing apparatus 1 for stabilizing the attitude of the two-wheel vehicle is improved.

In the present embodiment, since the attitude control torque is generated by the electric moor 15, the attitude control torque is easily controlled.

(Second embodiment)

In the above embodiment, the convergence time Tc is fixed time, which is preliminary set. In the present embodiment, the convergence time Tc is variable. Specifically, since the convergence time Tc depends on the intention of the rider (i.e., preference of the rider) and riding characteristics of the rider, the convergence time Tc is variable.

A convergence time setting switch 21 as a convergence time setting element, which is operable by the rider, is arranged on a handle 3C. Figs. 8A to 8C show various convergence time setting switches 21.

Fig. 8A shows the convergence time setting switch 21 for setting the convergence time Tc in four modes including a slow mode, a normal mode, a fast mode, and an automatic mode. For example, the slow mode represents that the convergence time Tc is five seconds, the normal mode represents that the convergence time Tc is three seconds, and the fast mode represents that the convergence time Tc is one second. Here, the automatic mode represents that the convergence time Tc is automatically set according to the vehicle speed.

Fig. 8B shows the convergence time setting switch 21 for setting the convergence time Tc automatically according to the characteristics of the rider such as physical size of the rider. Specifically, the convergence time Tc setting switch 21 automatically selects the convergence time Tc based on a table representing the relationship between a parameter and the convergence time Tc. The table is preliminary stored in a ROM or the like, and the parameter is input or selected by the rider, and the parameter is determined by an age, a sex, a body height, a body weight and the like.

Fig. 8C shows the convergence time setting switch 21 for setting the convergence time Tc continuously from a slow mode to a fast mode. Here, the slow mode represents that the convergence time Tc is five seconds, and the fast mode represents that the convergence time Tc is one second.

In the present embodiment, as shown in Fig. 9, before the target rolling angular speed dθr0 is calculated in step S9, the convergence time Tc is determined according to the setting mode of the convergence time setting switch 21 in step S8. Here, the convergence time Tc is used for calculating the target rolling angular speed dθr0. The control steps other than step S8 in Fig. 9 are the same as in Fig. 7.

Thus, in the present embodiment, the attitude of the bicycle 3 is controlled according to the intention or the preference of the rider. Thus, the strangeness of the rider is reduced, and the rolling of the bicycle 3 is reduced.

(Third embodiment)

In the second embodiment, the convergence time Tc is changed, so that the actual convergence time Tca is directly changed. In the present embodiment, the convergence time Tc is fixed, but the target torque Tr is changed, so that the actual convergence time Tca is indirectly changed.

Specifically, when the target rolling angular speed dθr0 becomes large, the target torque Tr increases. When the target rolling angular speed dθr0 becomes small, the target torque Tr decreases. When the convergence time Tc becomes large, the target rolling angular speed dθr0 decrease. When the convergence time Tc becomes small, the target rolling angular speed dθr0 increase. Accordingly, when the convergence time Tc is fixed, and the target torque Tr is changed, the actual convergence time Tca is also changed.

In the present embodiment, a target torque change switch 23 for changing the target torque Tr is arranged on the handle 3C or the like, as shown in Fig. 10. Here, the target torque Tr is determined by the convergence time Tc, which is preliminary set.

In the present embodiment, as shown in Fig. 11, in step S12, a gain as a magnification ratio is multiplied by the target toque Tr. The gain is set by the target torque change switch 23, and the target toque Tr is calculated based on the target rolling angular speed dθr0. The multiplied value is reset as the target torque Tr. Then, the electric motor 15 is controlled by the PID method with using the target torque Tr. The control steps other than step S12 in Fig. 11 are the same as in Fig. 7.

Thus, in the present embodiment, the attitude of the bicycle 3 is controlled according to the intention or the preference of the rider. Thus, the strangeness of the rider is reduced, and the rolling of the bicycle 3 is reduced.

Here, the off state of the target torque change switch 23 in Fig. 10 means that the gain is set to be zero. When the target torque change switch 23 is set to the off state, the attitude stabilizing apparatus 1 for stabilizing the attitude of the two-wheel vehicle substantially stops stabilizing. In the present embodiment, the target torque change switch 23 controls the gain continuously from a low level to a high level. The low level represents that the gain is 0.1. The high level represents that the gain is 2.0.

(Fourth embodiment)

In the third embodiment, the target torque Tr is controlled so that the actual convergence time Tca is changed. In the present embodiment, the target yaw rate calculation map in Fig. 5 used for calculating the target yaw rate ω is changed according to the vehicle speed, so that the actual convergence time Tca is changed.

Specifically, when the target torque Tr is determined, it is necessary to calculate the target yaw rate ω. Thus, when the target yaw rate ω is controlled so that the target torque Tr is indirectly changed, and finally, the actual convergence time Tca is changed.

In the present embodiment, a pair of target torque change switches 23A, 23B in Figs. 12A and 12B for changing the target torque Tr are arranged on the handle 3C. The target torque change switches 23A, 23B provide a convergence time setting device, which is operable by the rider.

Here, when the target torque change switch 23A is in an off state, the attitude stabilizing apparatus 1 stops stabilizing the attitude of the two-wheel vehicle, or does not execute to stabilize the attitude of the two-wheel vehicle. When the target torque change switch 23A is in a low speed state, the attitude stabilizing apparatus 1 stabilizes the attitude of the two-wheel vehicle only in a case where the vehicle speed is disposed in a low speed region (e.g., the speed is equal to or smaller than 5km/h). Accordingly, when the target torque change switch 23A is in a low speed state, the attitude stabilizing apparatus 1 stops stabilizing the attitude of the two-wheel vehicle, or does not execute to stabilize the attitude of the two-wheel vehicle in a case where the vehicle speed is disposed in a high speed region (e.g., the speed is larger than 5km/h). When the target torque change switch 23A is in a high speed state, the attitude stabilizing apparatus 1 stabilizes the attitude of the two-wheel vehicle only in a case where the vehicle speed is disposed in the high speed region. Accordingly, when the target torque change switch 23A is in the high speed state, the attitude stabilizing apparatus 1 stops stabilizing the attitude of the two-wheel vehicle, or does not execute to stabilize the attitude of the two-wheel vehicle in a case where the vehicle speed is disposed in the low speed region. When the target torque change switch 23A is in an automatic state, the attitude stabilizing apparatus 1 stabilizes the attitude of the two-wheel vehicle automatically in both of the high speed region and the low speed region.

The target torque change switch 23B sets the gain, similar to the third embodiment. Specifically, when the target torque change switch 23A is set to the automatic state, the gain is automatically selected according to a relationship between the parameter and the gain, which is preliminary stored in the Rom and the like. Here, the parameter is determined according the age, the sex, the body height, the body weight and the like, which are input and selected by the rider. When the target torque change switch 23A is set to the low speed state or the high speed state, the gain is 1.0.

In the present embodiment, as shown in Fig. 13, when the vehicle speed V is larger than zero km/h, and further, the steering wheel angel θs is larger than zero degree, i.e., when the determination in step S3 is "YES," it goes to step S4. In step S4, the target yaw rate calculation map for calculating the target yaw rate ω is selected based on the status of the target torque change switch 23A. Then, in step S5, the target yaw rate ω is calculated according to the target yaw rate calculation map. The control steps other than step S4 in Fig. 13 are the same as in Fig. 11.

Thus, in the present embodiment, the attitude of the bicycle 3 is controlled according to the intention or the preference of the rider. Thus, the strangeness of the rider is reduced, and the rolling of the bicycle 3 is reduced.

(Fifth embodiment)

In the present embodiment, in addition to the attitude control torque, the driving force for the bicycle 3 is also generated by the electric motor 15. Specifically, in the present embodiment, the attitude stabilizing apparatus 1 and the attitude stabilizing method are used for an electric power-assisted bicycle.

In the present embodiment, as shown in Fig. 14, after the target torque Tr is calculated in step S11, the target power assist torque for assisting a driving power of the bicycle 3 with using the electric motor 15 is calculated in step S17 according to the pedal force applied to the pedal of the bicycle 3. A method for calculating the target power assist torque may be any method. For example, the method for calculating the target power assist torque is the same as the method described in JP-A-H07-309283.

Then, in step S19, a summation of the target power assist torque and the target torque Tr is calculated in step S19. Here, the summation of the target power assist torque and the target torque Tr is defined as a target torque summation. Then, in step S21, it is determined whether the target torque summation is equal to or smaller than the upper limit torque (i.e., the maximum torque).

When it is determined that the target torque summation is larger than the upper limit torque, i.e., when the determination in step S21 is "NO," it returns to step S1. When it is determined that the target torque summation is equal to or smaller than the upper limit torque, i.e., when the determination in step S21 is "YES," it goes to step S23. In step S23, the electric motor 15 is controlled to generate the target torque summation.

Thus, in the present embodiment, the strangeness of the rider is reduced, and the rolling of the bicycle 3 is reduced.

(Other embodiments)

In the above embodiments, the torque for controlling the attitude of the bicycle 3 is applied to the front wheel 3A as a steering wheel. Alternatively, the torque for controlling the attitude of the bicycle 3 may be applied to the rear wheel 3A as a driving wheel.

In the above embodiments, the attitude stabilizing apparatus 1 is attached to the bicycle 3. Alternatively, the attitude stabilizing apparatus 1 may be attached to a motorcycle or the like.

In the above embodiments, only the electric motor 15 generates the torque for controlling the attitude of the bicycle 3. Alternatively, when the torque for controlling the attitude of the bicycle 3 is negative, i.e., a minus value, the negative torque may be applied to the wheel with using a brake.

In the above embodiments, the steering Wheel angle $\theta s$ is detected, so that an operating amount of the handle steered by the rider is detected. Alternatively, the operating amount of the body of the bicycle 3 generated by the rider may be detected according to a change of a synthesized gravity center of the rider and the body of the bicycle 3, which is caused by a weight shift of the rider 3. Alternatively, the operating amount of the body of the bicycle 3 generated by the rider may be detected according to force of the rider applied to the handle 3C.

In the above embodiments, the electric motor 15 generates the torque for conforming the actual rolling angle $\theta r$ to the target rolling angle $\theta r0$ Alternatively, the attitude stabilizing apparatus 1 may control the electric motor 15 to generate the torque for reducing an actual rolling angle speed to be zero so that the bicycle 3 does not fall down. In this case, it is not necessary to obtain the actual rolling angle $\theta r$ and the target rolling angle $\theta r0$.

The above disclosure has the following aspects.

According to a first aspect of the present disclosure, a two-wheel vehicle having two wheels, which are arranged along with a traveling direction, and capable of turning around a turning center by tilting a body of the two-wheel vehicle toward the turning center, includes: a torque generator for generating a torque, which is applied to at least one of the two wheels; and a controller for controlling the torque generator to generate the torque for reducing an actual rolling angle speed to be zero. The actual rolling angle speed is a time derivative term of an actual rolling angle of the two-wheel vehicle.

In the above case, the vehicle does not fall down.

According to a second aspect of the present disclosure, a two-wheel vehicle having two wheels, which are arranged along with a traveling direction, and capable of turning around a turning center by tilting a body of the two-wheel vehicle toward the turning center, includes: an operation amount detector for detecting an operation amount of a driver, which is applied to the body; a target rolling angle determination device for determining a target rolling angle based on at least the operation amount; an actual rolling angle detector for detecting an actual rolling angle of the two-wheel vehicle; a torque generator for generating a torque, which is applied to at least one of the two wheels; and a controller for controlling the torque generator to generate the torque for reducing an absolute value of a difference between the target rolling angle and the actual rolling angle.

Here, the driver as the rider of the two-wheel vehicle drives the two-wheel vehicle by applying the operation force to the body of the vehicle via a saddle as a seat and a pedal as a step in addition to the steering device such as a handle so that the driver keeps balance of the body. Here, the applying the operation force includes a displacement of the gravity center. For example, the driver changes a seat position so that the gravity center is displaced.

When the driver tilts (i.e., rolls) the body with respect to the vertical direction of the road so that the vehicle turns right or left, the driver operates the handle or applying the operation force in order to balance the body. Alternatively, when an external disturbance applies to the body, or when the drive unintentionally operates the handle so that the body wobbles, the driver operates the handle or applying the operation force in order to balance the body.

Here, when the body wobbles, a summation of rolling moments for rolling or tilting the body is changed or not zero. The rolling moment applies to the body.

Thus, when the summation of the rolling moments periodically changes, the rolling angle of the body periodically changes according to the variation of the summation of the rolling moments. When the summation of the rolling moments is not zero, the body continues to roll along with a direction of the rolling moment. Thus, the body of the vehicle may fall down.

When the summation of the rolling moments is zero, i.e., when all of the rolling moments balances, the rolling moment caused by the gravity applied to the body and including the gravity applied to the driver is equal to the rolling moment caused by the centrifugal force (i.e., inertia force with respect to centripetal force).

The rolling moment caused by the centrifugal force is generated when the body rolls or wobbles. The magnitude of he rolling moment is determined by the vehicle speed of the vehicle, which wobbles.

In the above vehicle, the controller controls the torque generator to generate the torque for reducing an absolute value of a difference between the target rolling angle and the actual rolling angle. Thus, the summation of the rolling moments reaches zero, and the wobbling of the body is reduced.

In this case, the target rolling angle is determined based on at least the operation amount detected by the operation amount detector. Thus, the target rolling angle reflects on the intention of the driver. Thus, since the controller controls the actual torque based on the difference between the target rolling angle reflecting the intention of the driver and the actual rolling angle, unpleasant sensation of the driver is restricted. Further, the wobbling of the vehicle is reduced.

Alternatively, the two-wheel vehicle may further include: a vehicle speed detector for detecting a vehicle speed of the two-wheel vehicle. The two wheels include a steering wheel, which provides the traveling direction. The operation amount is a steering wheel angle of the steering wheel. The target rolling angle determination device includes: a memory for storing a relationship among the steering wheel angle, the vehicle speed and a yaw rate; a target yaw rate determination device for determining a target yaw rate according to the relationship among the steering wheel angle, the vehicle speed and the yaw rate; and a target rolling angle calculator for calculating the target rolling angle based on a balance condition between a first rolling moment and a second rolling moment. The first rolling moment is generated by a gravity applied to the body, and the second rolling moment is calculated from the yaw rate and the vehicle speed. In this case, the target rolling angle is calculated based on the steering wheel angle. Since the steering wheel angle largely reflects on the intention of the driver, the unpleasant sensation of the driver is much restricted. Here, in the two-wheel vehicle, the steering wheel angle of the steering wheel changes when the driver operates the handle, when the driver shifts the weight of the driver, or when the driver controls the driving force. Accordingly, when the steering wheel angle is detected, the operation amount of the driver to the body of the vehicle is appropriately detected.

Alternatively, the at least one of the two wheels may be a steering wheel. Thus, the torque generated by the torque generator is effectively converted to the rolling moment for changing the rolling angle of the body of the vehicle. Thus, when the torque applied to a wheel other than the steering wheel is controlled, the rolling moment caused by the centrifugal force is adjusted. Thus, the rolling moment along with the direction for increasing the rolling angle of the body is the rolling moment caused by the gravity only. However, when the body already rolls, i.e., tilts, the steering wheel angle of the steering wheel is larger than zero. Under this condition, when he torque applied to the steering wheel is changed, the rolling moment other than the centrifugal force is newly generated by the torque variation. Accordingly, when the torque set by the controller is applied to the steering wheel, the torque generated by the torque generator is effectively converted to the rolling moment for changing the rolling angle of the body.

Alternatively, the torque generator may further generate a driving torque in addition to the torque for reducing the absolute value of the difference. The driving torque is applied to the at least one of the two wheels or another of the two wheels. In this case, with using a simple structure of the vehicle, the unpleasant sensation of the driver is restricted, and the wobbling of the vehicle is reduced.

Alternatively, the torque generator may be an electric motor. In this case, the torque generator is easily controlled, compared with a case where the torque generator is an internal combustion engine.

According to a third aspect of the present disclosure, an attitude stabilizing apparatus for stabilizing an attitude of a two-wheel vehicle having two wheels, which are arranged along with a traveling direction, and capable of turning around a turning center by tilting a body of the two-wheel vehicle toward the turning center, includes: an operation amount detector for detecting an operation amount of a driver, which is applied to the body; a target rolling angle determination device for determining a target rolling angle based on at least the operation amount; an actual rolling angle detector for detecting an actual rolling angle; a torque generator for generating a torque, which is applied to at least one of the two wheels; and a controller for controlling the torque generator to generate the torque for reducing an absolute value of a difference between the target rolling angle and the actual rolling angle.

In the above apparatus, the unpleasant sensation of the driver is restricted, and the wobbling of the vehicle is reduced.

According to a fourth aspect of the present disclosure, a control method for stabilizing an attitude of a two-wheel vehicle having two wheels, which are arranged along with a traveling direction, and capable of turning around a turning center by tilting a body of the two-wheel vehicle toward the turning center, includes: detecting an operation amount of a driver, which is applied to a body of the two-wheel vehicle; determining a target rolling angle based on at least the operation amount; detecting an actual rolling angle; generating a torque, which is applied to at least one of the two wheels; and controlling the torque to reduce an absolute value of a difference between the target rolling angle and the actual rolling angle.

In the above method, the unpleasant sensation of the driver is restricted, and the wobbling of the vehicle is reduced.

According to a fifth aspect of the present disclosure, an attitude stabilizing apparatus for stabilizing an attitude of a two-wheel vehicle having two wheels, which are arranged along with a traveling direction, and capable of turning around a turning center by tilting a body of the two-wheel vehicle toward the turning center, includes: a torque generator for generating a torque, which is applied to at least one of the two wheels; and a controller for controlling the torque generator to generate the torque for reducing an actual rolling angle speed to be zero. The actual rolling angle speed is a time derivative term of an actual rolling angle of the two-wheel vehicle.

In the above case, the vehicle does not fall down.

According to a sixth aspect of the present disclosure, a control method for stabilizing an attitude of a two-wheel vehicle having two wheels, which are arranged along with a traveling direction, and capable of turning around a turning center by tilting a body of the two-wheel vehicle toward the turning center, includes: generating a torque, which is applied to at least one of the two wheels; and controlling the torque to reduce an actual rolling angle speed to be zero. The actual rolling angle speed is a time derivative term of an actual rolling angle of the two-wheel vehicle.

In the above case, the vehicle does not fall down.

While the invention has been described with reference to preferred embodiments thereof, it is to be understood that the invention is not limited to the preferred embodiments and constructions. The invention is intended to cover various modification and equivalent arrangements. In addition, while the various combinations and configurations, which are preferred, other combinations and configurations, including more, less or only a single element, are also within the spirit and scope of the invention.

A two-wheel vehicle having two wheels, which are arranged along with a traveling direction, and capable of turning around a turning center by tilting a body of the two-wheel vehicle toward the turning center, the two-wheel vehicle includes: a torque generator (15) for generating a torque, which is applied to at least one of the two wheels; and a controller (13) for controlling the torque generator (15) to generate the torque for reducing an actual rolling angle speed to be zero. The actual rolling angle speed is a time derivative term of an actual rolling angle of the two-wheel vehicle.

## Claims

1. A two-wheel vehicle having two wheels, which are arranged along with a traveling direction, and capable of turning around a turning center by tilting a body of the two-wheel vehicle toward the turning center, the two-wheel vehicle comprising:

   an operation amount detector (**7**) for detecting an operation amount of a driver, which is applied to the body;
   a target rolling angle determination device (**5**) for determining a target rolling angle based on at least the operation amount;
   an actual rolling angle detector (**11**) for detecting an actual rolling angle of the two-wheel vehicle;
   a torque generator **(15)** for generating a torque, which is applied to at least one of the two wheels; and
   a controller **(13)** for controlling the torque generator **(15);**

   **characterized in that**

   the controller **(13)** is adapted to control the torque generator **(15)** to generate the torque for reducing an absolute value of a difference between the target rolling angle and the actual rolling angle.

2. The two-wheel vehicle according to claim 1, further comprising:

   a vehicle speed detector **(9)** for detecting a vehicle speed of the two-wheel vehicle,
   wherein the two wheels include a steering wheel, which provides the traveling direction,
   wherein the operation amount is a steering wheel angle of the steering wheel,
   wherein the target rolling angle determination device (**5**) includes:

      a memory (**ROM**) for storing a relationship among the steering wheel angle, the vehicle speed and a yaw rate;

a target yaw rate determination device (**5A**) for determining a target yaw rate according to the relationship among the steering wheel angle, the vehicle speed and the yaw rate; and
a target rolling angle calculator **(5D)** for calculating the target rolling angle based on a balance condition between a first rolling moment and a second rolling moment,

wherein the first rolling moment is generated by a gravity applied to the body, and
wherein the second rolling moment is calculated from the yaw rate and the vehicle speed.

**3.** The two-wheel vehicle according to claim 1 or 2,
wherein the at least one of the two wheels is a steering wheel.

**4.** The two-wheel vehicle according to claim 3,
wherein the torque generator (**15**) further generates a driving torque in addition to the torque for reducing the absolute value of the difference, and
wherein the driving torque is applied to the at least one of the two wheels or another of the two wheels.

**5.** The two-wheel vehicle according to claim 4,
wherein the torque generator (**15**) is an electric motor (**15**).

**6.** An attitude stabilizing apparatus for stabilizing an attitude of a two-wheel vehicle having two wheels, which are arranged along with a traveling direction, and capable of turning around a turning center by tilting a body of the two-wheel vehicle toward the turning center, the attitude stabilizing apparatus comprising:

an operation amount detector (**7**) for detecting an operation amount of a driver, which is applied to the body;
a target rolling angle determination device (**5**) for determining a target rolling angle based on at least the operation amount;
an actual rolling angle detector (**11**) for detecting an actual rolling angle;
a torque generator (**15**) for generating a torque, which is applied to at least one of the two wheels; and
a controller (**13**) for controlling the torque generator (**15**);

**characterized in that**

the controller (**13**) is adapted to control the torque generator (**15**) to generate the torque for reducing an absolute value of a difference between the target rolling angle and the actual rolling angle.

**7.** A control method for stabilizing an attitude of a two-wheel vehicle having two wheels, which are arranged along with a traveling direction, and capable of turning around a turning center by tilting a body of the two-wheel vehicle toward the turning center, the control method comprising:

detecting an operation amount of a driver, which is applied to a body of the two-wheel vehicle;
determining a target rolling angle based on at least the operation amount;
detecting an actual rolling angle; and
generating a torque, which is applied to at least one of the two wheels,

**characterized by**

controlling the torque to reduce an absolute value of a difference between the target rolling angle and the actual rolling angle.

## Patentansprüche

**1.** Zweirad-Fahrzeug mit zwei Rädern, die einhergehend mit einer Fahrtrichtung angeordnet sind, und das dazu fähig ist, eine Kurvenfahrt um einen Kurvenmittelpunkt durch Neigen eines Körpers des Zweirad-Fahrzeugs in Richtung des Kurvenmittelpunkts durchzuführen, mit:

einem Betätigungsausmaßdetektor (**7**) zum Erfassen eines Ausmaßes einer Betätigung eines Fahrers, die an den Körper angelegt wird;

einer Soll-Wankwinkel-Bestimmungseinrichtung (**5**) zum Bestimmen eines Soll-Wankwinkels basierend auf zumindest dem Betätigungsumfang;
einem Ist-Wankwinkeldetektor (**11**) zum Erfassen eines Ist-Wankwinkels des Zweirad-Fahrzeugs;
einem Drehmomenterzeuger (**15**) zum Erzeugen eines Drehmoments, das an mindestens eines der beiden Räder angelegt wird; und
einer Steuerung (**13**) zum Steuern des Drehmomenterzeugers (**15**);

**dadurch gekennzeichnet, dass**

die Steuerung (**13**) eingerichtet ist, um den Drehmomenterzeuger zu steuern, um das Drehmoment zum Reduzieren eines Absolutwerts einer Differenz zwischen den Soll-Wankwinkel und dem Ist-Wankwinkel zu erzeugen.

**2.** Zweirad-Fahrzeug gemäß Anspruch 1, weiterhin mit:

einem Fahrzeugsgeschwindigkeitsdetektor (**9**) zum Erfassen einer Fahrzeuggeschwindigkeit des Zweirad-Fahrzeugs,
wobei die beiden Räder ein lenkendes Rad umfassen, welches die Fahrtrichtung bestimmt,
wobei das Betätigungsausmaß ein Lenkungswinkel des lenkenden Rades ist,
wobei die Soll-Wankwinkel-Bestimmungseinrichtung (**5**) umfasst:

einen Speicher (**ROM**) zum Speichern einer Beziehung zwischen dem Lenkungswinkel, der Fahrzeuggeschwindigkeit und einer Giergeschwindigkeit;
eine Soll-Giergeschwindigkeits-Bestimmungseinrichtung (**5A**) zum Bestimmen einer Soll-Giergeschwindigkeit gemäß der Beziehung zwischen dem Lenkungswinkel, der Fahrzeuggeschwindigkeit und der Giergeschwindigkeit; und
eine Soll-Wankwinkel-Berechnungseinrichtung (**D**) zum Berechnen des Soll-Wankwinkels basierend auf einem Gleichgewichtszustand zwischen einem ersten Wankmoment und einem zweiten Wankmoment,

wobei das erste Wankmoment durch die an den Körper angelegte Schwerkraft erzeugt wird, und
wobei das zweite Wankmoment aus der Giergeschwindigkeit und der Fahrzeuggeschwindigkeit berechnet wird.

**3.** Zweirad-Fahrzeug gemäß Anspruch 1 oder 2,
wobei das mindestens eine der beiden Räder ein lenkendes Rad ist.

**4.** Zweirad-Fahrzeug gemäß Anspruch 3,
wobei der Drehmomenterzeuger (**15**) weiterhin ein Antriebsmoment zusätzlich zu dem Moment zum Reduzieren des Absolutwerts der Differenz erzeugt, und
wobei das Antriebsmoment an das mindestens eine der beiden Räder oder das andere der beiden Räder angelegt wird.

**5.** Zweirad-Fahrzeug gemäß Anspruch 4,
wobei der Drehmomenterzeuger (**15**) ein Elektromotor (**15**) ist.

**6.** Lagestabilisierungsvorrichtung zum Stabilisieren einer Lage eines Zweirad-Fahrzeugs mit zwei Rädern, die einhergehend mit einer Fahrtrichtung angeordnet sind, und das dazu fähig ist, eine Kurvenfahrt um einen Kurvenmittelpunkt durch Neigen eines Körpers des Zweirad-Fahrzeugs in Richtung des Kurvenmittelpunkts durchzuführen, mit:

einem Betätigungsausmaßdetektor (**7**) zum Erfassen eines Ausmaßes einer Betätigung eines Fahrers, die an den Körper angelegt wird;
einer Soll-Wankwinkel-Bestimmungseinrichtung (**5**) zum Bestimmen eines Soll-Wankwinkels basierend auf zumindest dem Betätigungsumfang;
einem Ist-Wankwinkeldetektor (**11**) zum Erfassen eines Ist-Wankwinkels;
einem Drehmomenterzeuger (**15**) zum Erzeugen eines Drehmoments, das an mindestens eines der beiden Räder angelegt wird; und
einer Steuerung (**13**) zum Steuern des Drehmomenterzeugers (**15**);

**dadurch gekennzeichnet, dass**

die Steuerung (**13**) eingerichtet ist, um den Drehmomenterzeuger (**15**) zu steuern, um das Drehmoment zum Reduzieren eines Absolutwerts einer Differenz zwischen dem Soll-Wankwinkel und dem Ist-Wankwinkels zu erzeugen.

**7.** Steuerungsverfahren zum Stabilisieren einer Lage eines Zweirad-Fahrzeugs mit zwei Rädern, die einhergehend mit einer Fahrtrichtung angeordnet sind, und das dazu fähig ist, eine Kurvenfahrt um einen Kurvenmittelpunkt durch Neigen eines Körpers des Zweirad-Fahrzeugs in Richtung des Kurvenmittelpunkts durchzuführen, mit:

Erfassen eines Ausmaßes einer Betätigung eines Fahrers, die an einen Körper des Zweirad-Fahrzeugs angelegt wird;
Bestimmen eines Soll-Wankwinkels basierend auf zumindest dem Betätigungsumfang;
Erfassen eines Ist-Wankwinkels; und
Erzeugen eines Drehmoments, das an mindestens eines der beiden Räder angelegt wird,

**gekennzeichnet durch**

Steuern des Drehmoments, um einen Absolutwert einer Differenz zwischen dem Soll-Wankwinkel und dem Ist-Wankwinkel zu reduzieren.

## Revendications

**1.** Véhicule à deux roues présentant deux roues qui sont agencées le long d'une direction de déplacement et capables de tourner autour d'un centre de rotation par inclinaison d'un corps du véhicule à deux roues vers le centre de rotation, le véhicule à deux roues comprenant :

un détecteur de quantité d'opération (7) pour détecter une quantité d'opération d'un conducteur qui est appliqué au corps ;
un dispositif de détermination d'angle de roulis cible (5) pour déterminer un angle de roulis cible sur la base d'au moins la quantité d'opération ;
un détecteur d'angle de roulis réel (11) pour détecter un angle de roulis réel du véhicule à deux roues ;
un générateur de couple (15) pour générer un couple qui est appliqué à au moins une des deux roues ; et
un dispositif de commande (13) pour commander le générateur de couple (15) ;

**caractérisé en ce que**

le dispositif de commande (13) est adapté pour commander le générateur de couple (15) pour générer le couple afin de réduire une valeur absolue d'une différence entre l'angle de roulis cible et l'angle de roulis réel.

**2.** Véhicule à deux roues selon la revendication 1, comprenant en outre :

un détecteur de vitesse de véhicule (9) pour détecter une vitesse de véhicule du véhicule à deux roues,
dans lequel les deux roues incluent une roue de direction qui fournit une direction de déplacement,
dans lequel la quantité d'opération est un angle de roue de direction de la roue de direction,
dans lequel le dispositif de détermination d'angle de roulis cible (5) inclut :

> une mémoire (ROM) pour enregistrer un rapport parmi l'angle de roue de direction,
> la vitesse du véhicule et une vitesse de lacet ;
> un dispositif de détermination de vitesse de lacet cible (5A) pour déterminer une vitesse de lacet cible selon le rapport parmi l'angle de roue de direction, la vitesse de véhicule et la vitesse de lacet ; et
> un calculateur d'angle de roulis cible (5D) pour calculer l'angle de roulis cible sur la base d'une condition d'équilibre entre un premier moment de roulis et un second moment de roulis,
> dans lequel le premier moment de roulis est généré par une gravité appliquée au corps et
> dans lequel le second moment de roulis est calculé à partir de la vitesse de lacet et de la vitesse de véhicule.

**3.** Véhicule à deux roues selon la revendication 1 ou 2,
dans lequel l'au moins une des deux roues est une roue de direction.

**4.** Véhicule à deux roues selon la revendication 3, dans lequel le générateur de couple (15) génère de plus un couple d'entraînement outre le couple pour réduire la valeur absolue de la différence et dans lequel le couple d'entraînement est appliqué à l'au moins une des deux roues ou l'autre des deux roues.

**5.** Véhicule à deux roues selon la revendication 4, dans lequel le générateur de couple (15) est un moteur électrique (15).

**6.** Appareil de stabilisation de comportement pour la stabilisation d'un comportement d'un véhicule à deux roues présentant deux roues qui sont agencées le long d'une direction de déplacement et capables de tourner autour d'un centre de rotation par inclinaison d'un corps du véhicule à deux roues vers le centre de rotation, l'appareil de stabilisation de comportement comprenant :

un détecteur de quantité d'opération (7) pour détecter une quantité d'opération d'un conducteur qui est appliquée au corps ;
un dispositif de détermination d'angle de roulis cible (5) pour déterminer un angle de roulis cible sur la base d'au moins la quantité d'opération ;
un détecteur d'angle de roulis réel (11) pour détecter un angle de roulis réel ;
un générateur de couple (15) pour générer un couple qui est appliqué à au moins une des deux roues ; et
un dispositif de commande (13) pour commander le générateur de couple (15) ;

**caractérisé en ce que**

le dispositif de commande (13) est adapté pour commander le générateur de couple (15) pour générer le couple afin de réduire une valeur absolue d'une différence entre l'angle de roulis cible et l'angle de roulis réel.

**7.** Procédé de commande pour la stabilisation d'un comportement d'un véhicule à deux roues présentant deux roues qui sont agencées le long d'une direction de déplacement et capables de tourner autour d'un centre de rotation par inclinaison d'un corps du véhicule à deux roues vers le centre de rotation, le procédé de commande comprenant :

la détection d'une quantité d'opération d'un conducteur qui est appliquée à un corps du véhicule à deux roues ;
la détermination d'un angle de roulis cible sur la base d'au moins la quantité d'opération ;
la détection d'un angle de roulis réel ; et
la génération d'un couple qui est appliqué à au moins une des deux roues,

**caractérisé par**

la commande du couple pour réduire une valeur absolue d'une différence entre l'angle de roulis cible et l'angle de roulis réel.

FIG. 1

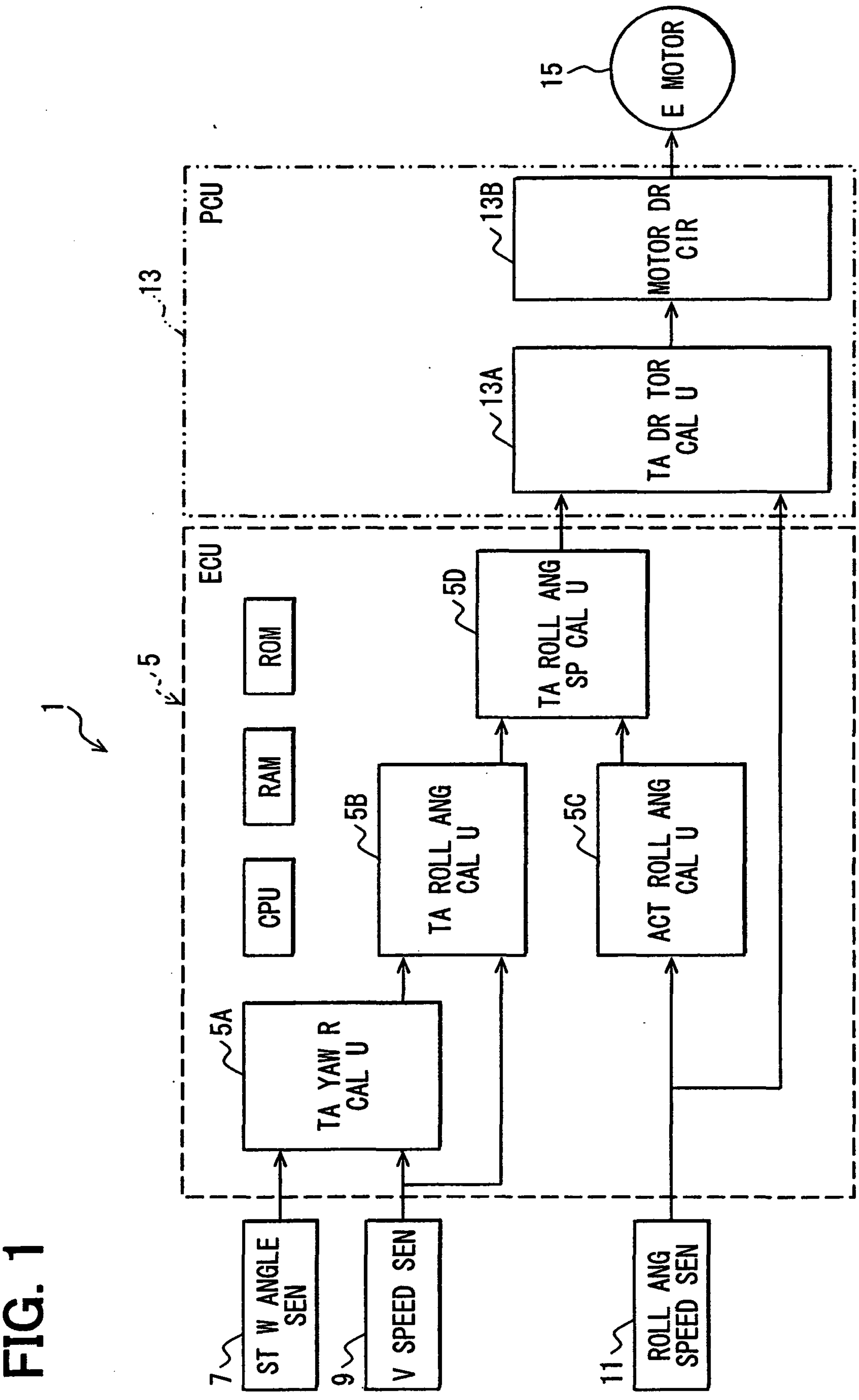
1
5
ECU
CPU
RAM
ROM
5A
TA YAW R CAL U
5B
TA ROLL ANG CAL U
5C
ACT ROLL ANG CAL U
5D
TA ROLL ANG SP CAL U
13
PCU
13A
TA DR TOR CAL U
13B
MOTOR DR CIR
15
E MOTOR
7
ST W ANGLE SEN
9
V SPEED SEN
11
ROLL ANG SPEED SEN

FIG. 2

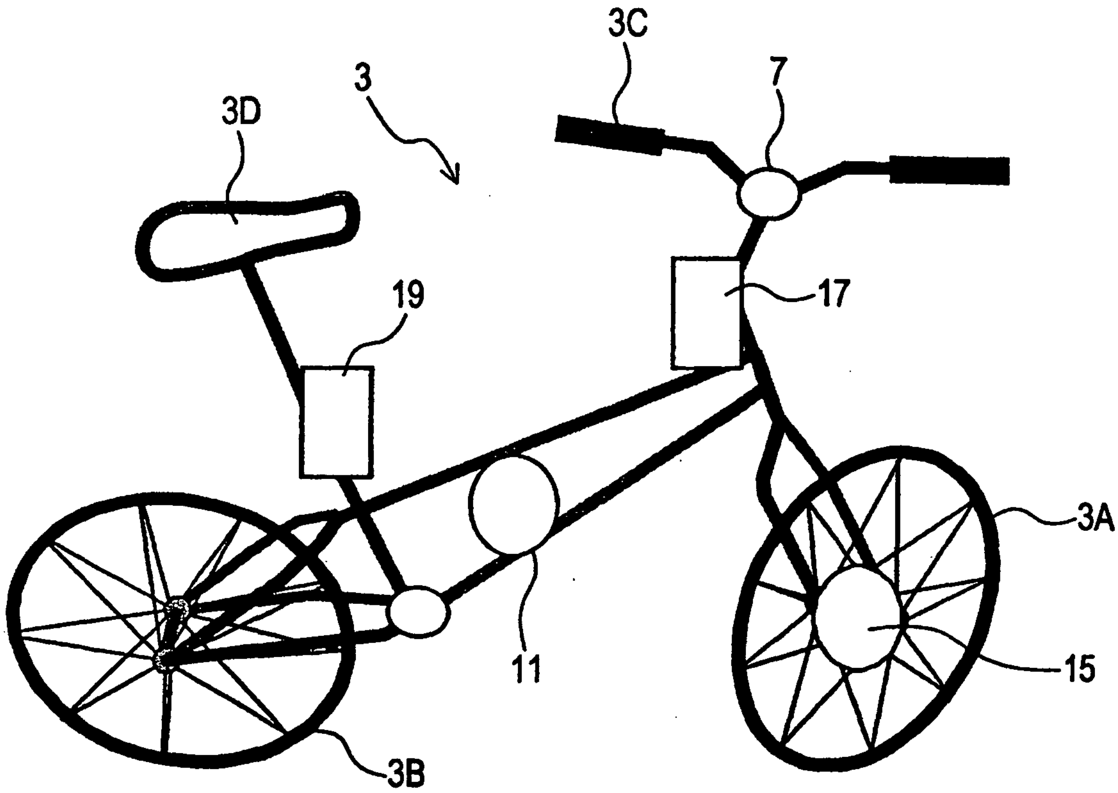

# FIG. 3

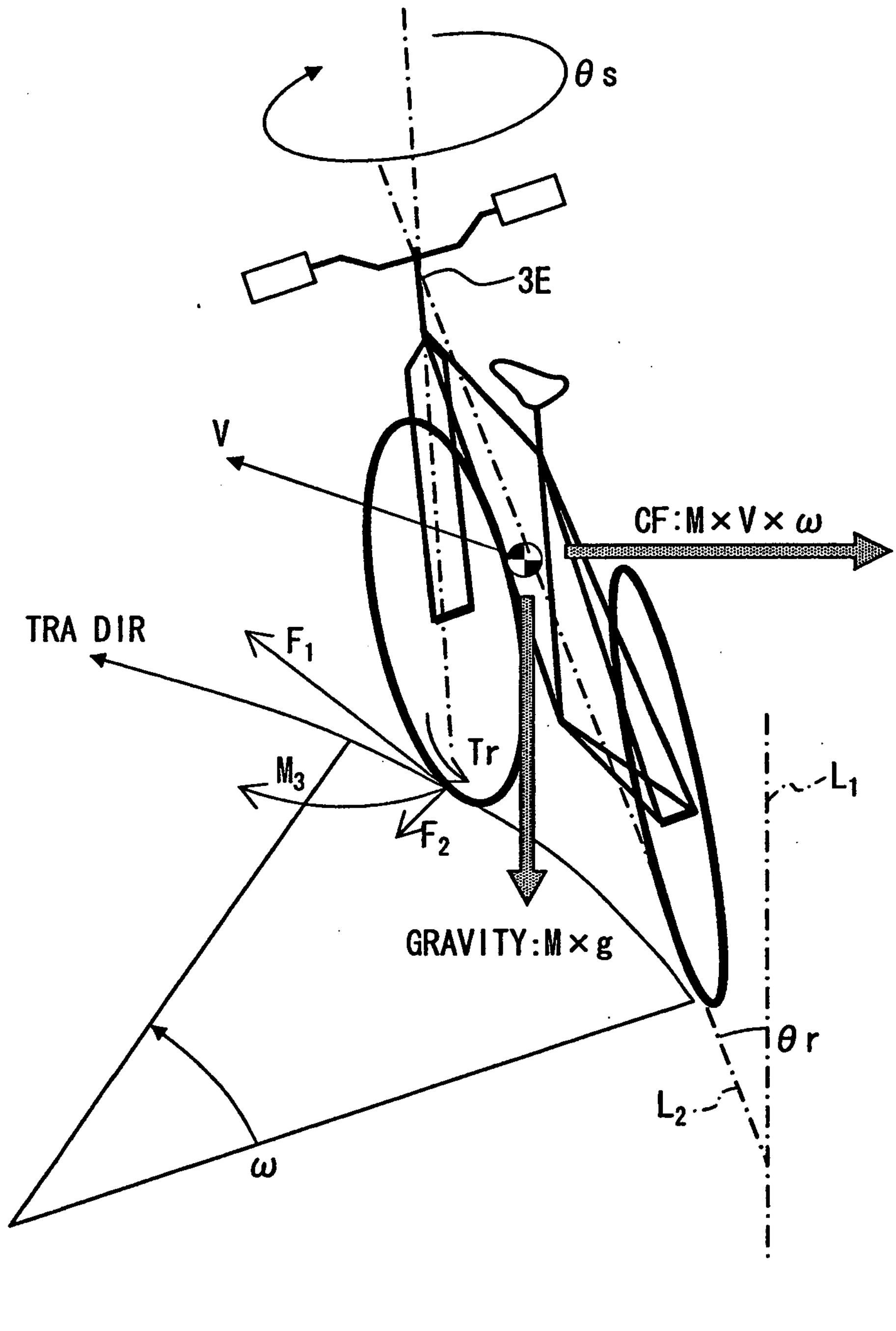

FIG. 4

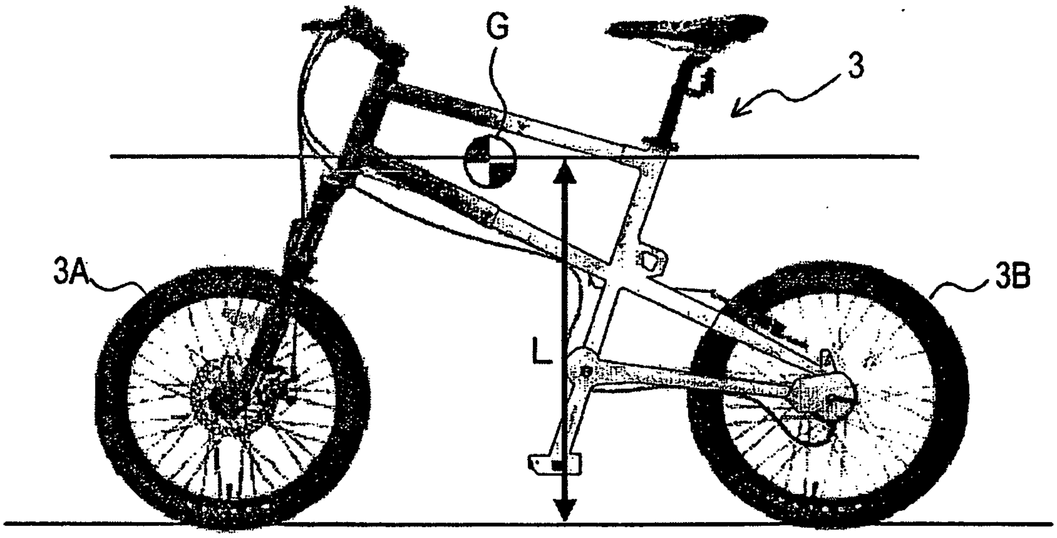


FIG. 5

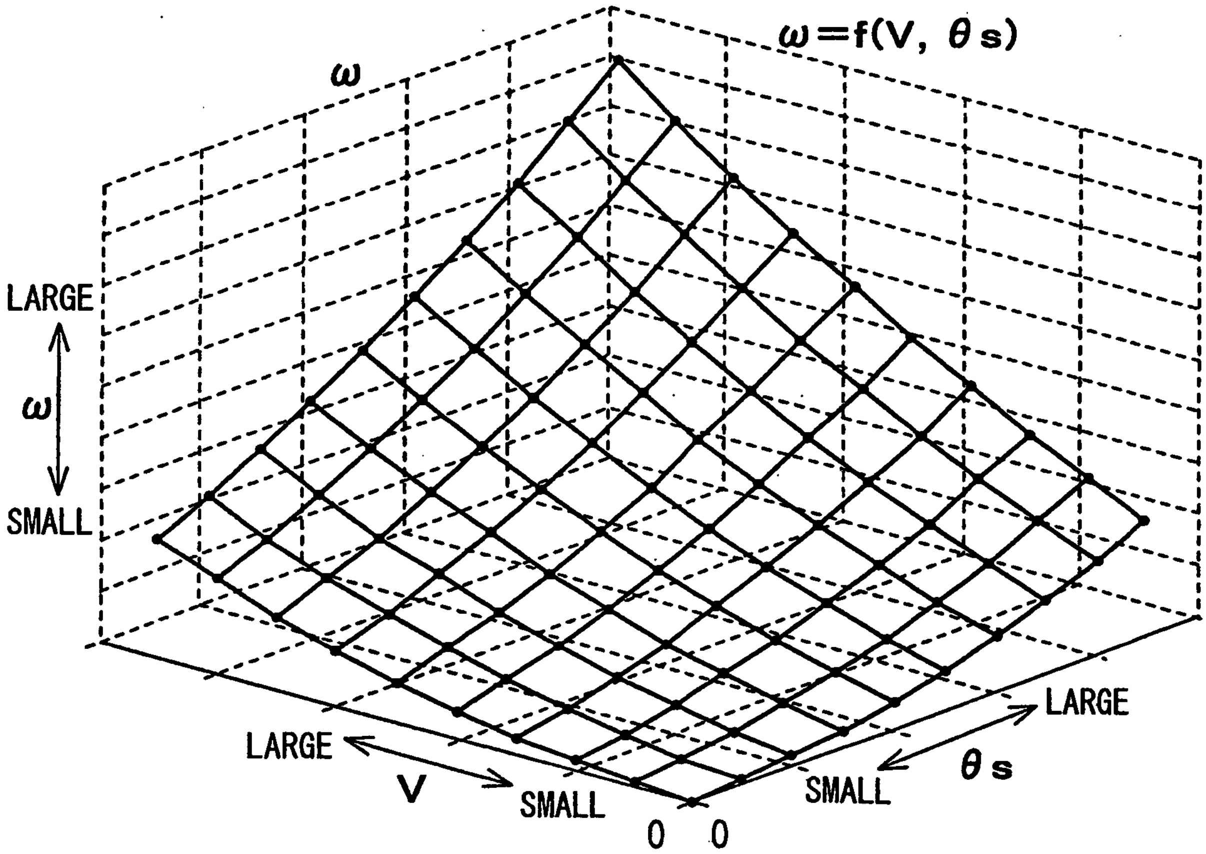

FIG. 6

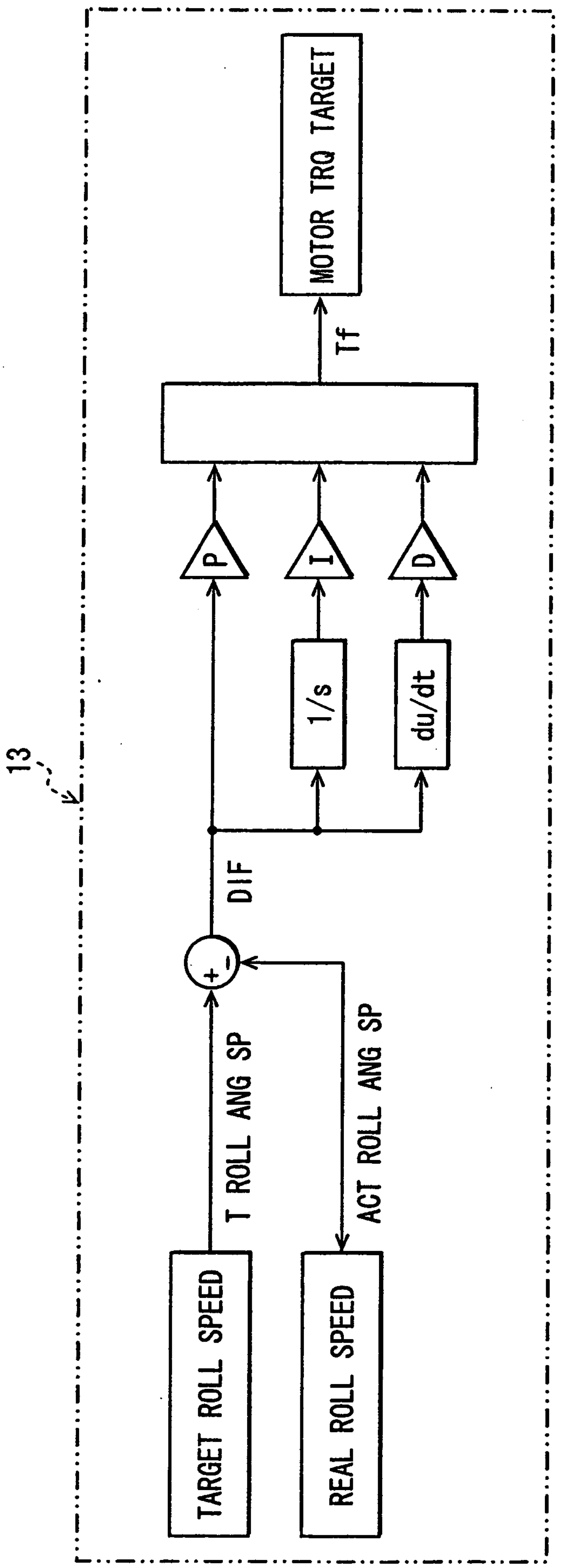
13
TARGET ROLL SPEED
REAL ROLL SPEED
T ROLL ANG SP
ACT ROLL ANG SP
+
-
DIF
1/s
du/dt
P
I
D
Tf
MOTOR TRQ TARGET

# FIG. 7

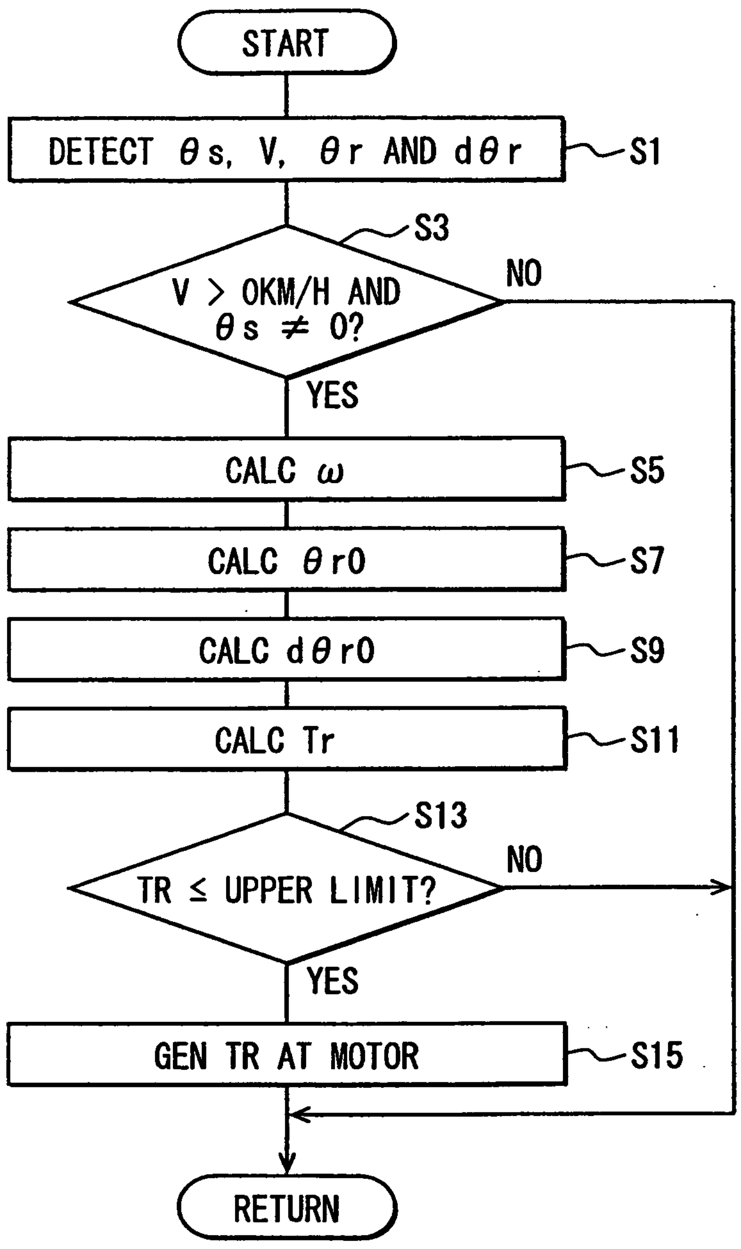
START
DETECT θs, V, θr AND dθr
S1
S3
V > 0KM/H AND θs ≠ 0?
NO
YES
CALC ω
S5
CALC θr0
S7
CALC dθr0
S9
CALC Tr
S11
S13
TR ≤ UPPER LIMIT?
NO
YES
GEN TR AT MOTOR
S15
RETURN

FIG. 8A

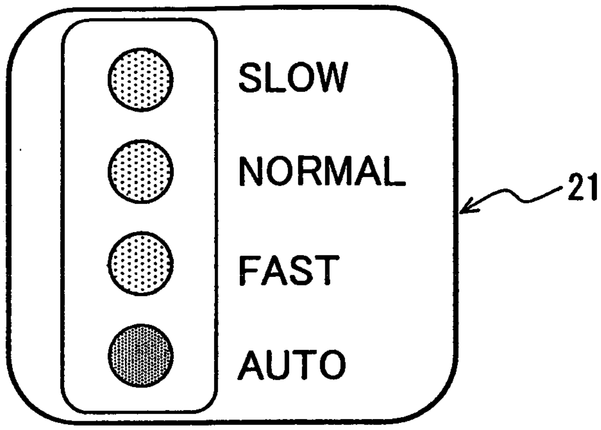


FIG. 8B

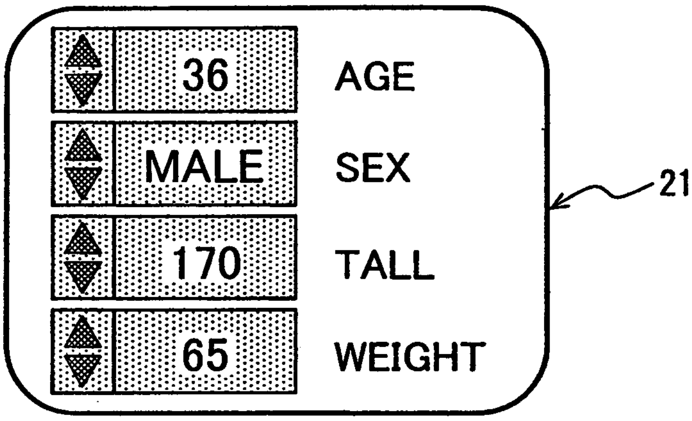


FIG. 8C

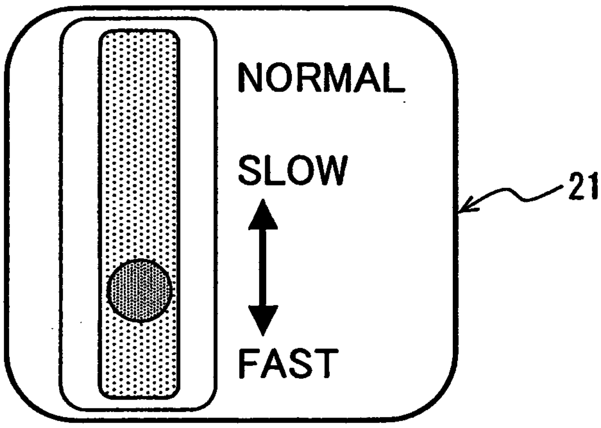

FIG. 9

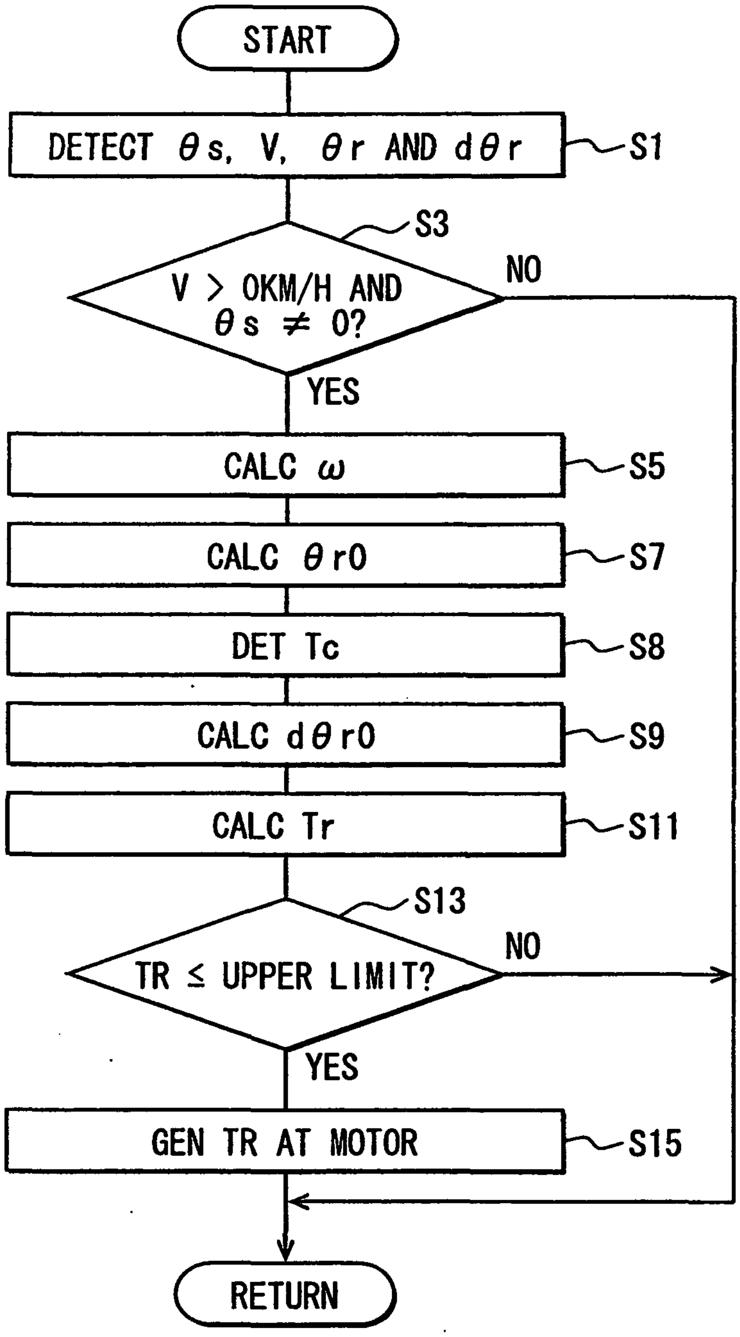
START
DETECT θs, V, θr AND dθr
S1
S3
V > 0KM/H AND
θs ≠ 0?
NO
YES
CALC ω
S5
CALC θr0
S7
DET Tc
S8
CALC dθr0
S9
CALC Tr
S11
S13
TR ≤ UPPER LIMIT?
NO
YES
GEN TR AT MOTOR
S15
RETURN

FIG. 10

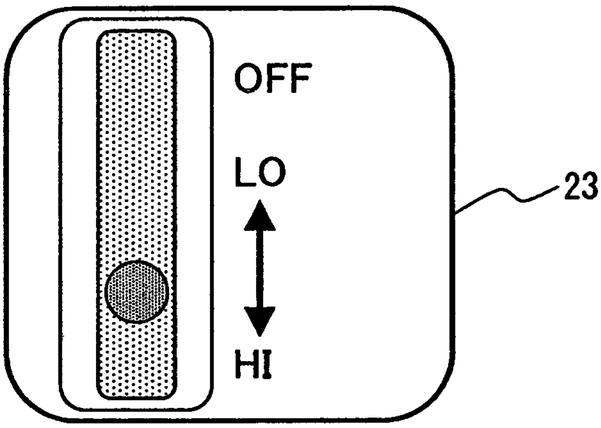

FIG. 11

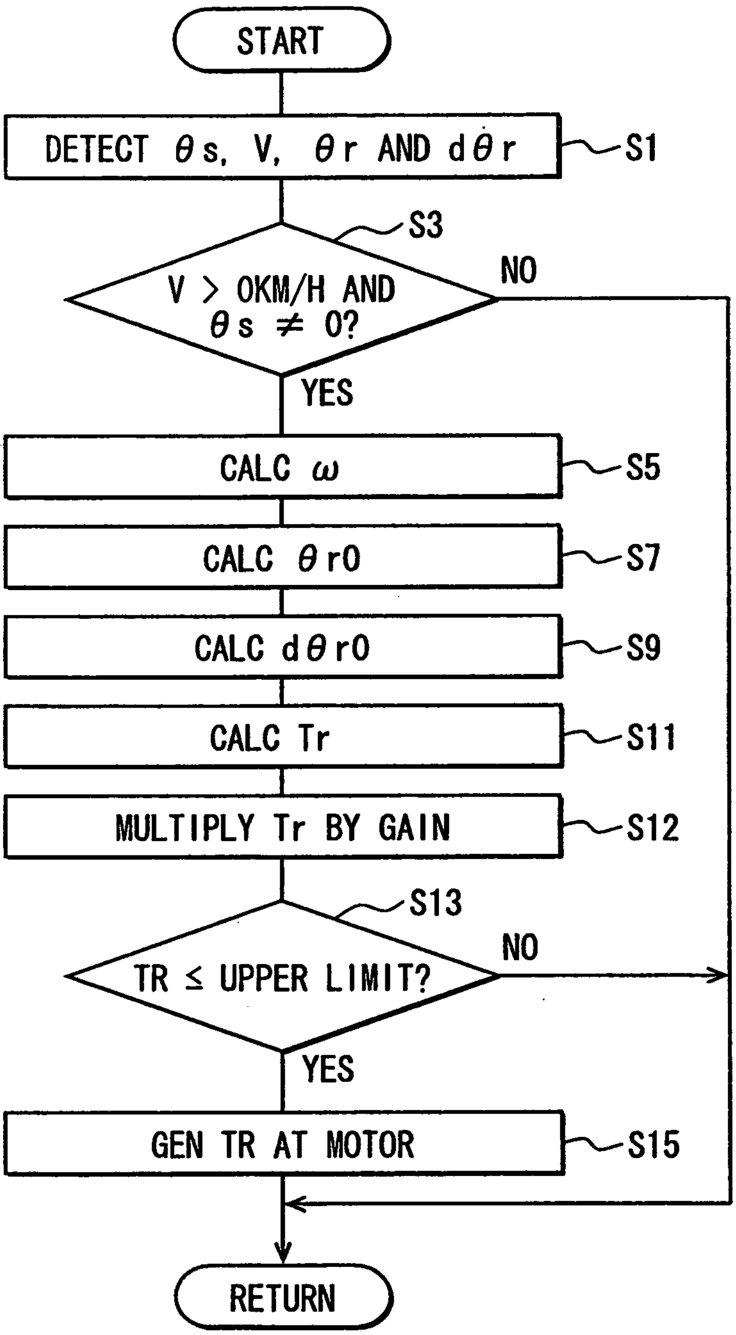
START
DETECT θs, V, θr AND dθr
S1
S3
V > 0KM/H AND
θs ≠ 0?
NO
YES
CALC ω
S5
CALC θr0
S7
CALC dθr0
S9
CALC Tr
S11
MULTIPLY Tr BY GAIN
S12
S13
TR ≤ UPPER LIMIT?
NO
YES
GEN TR AT MOTOR
S15
RETURN

FIG. 12A

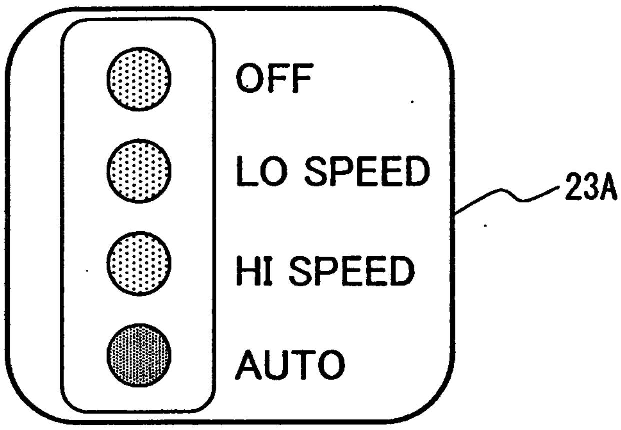


FIG. 12B

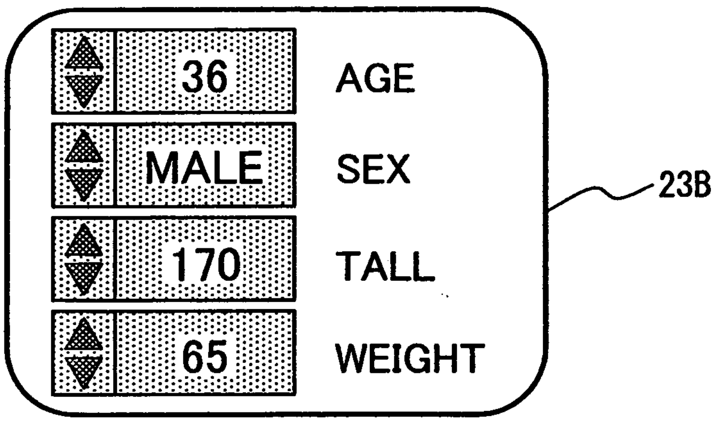

FIG. 13

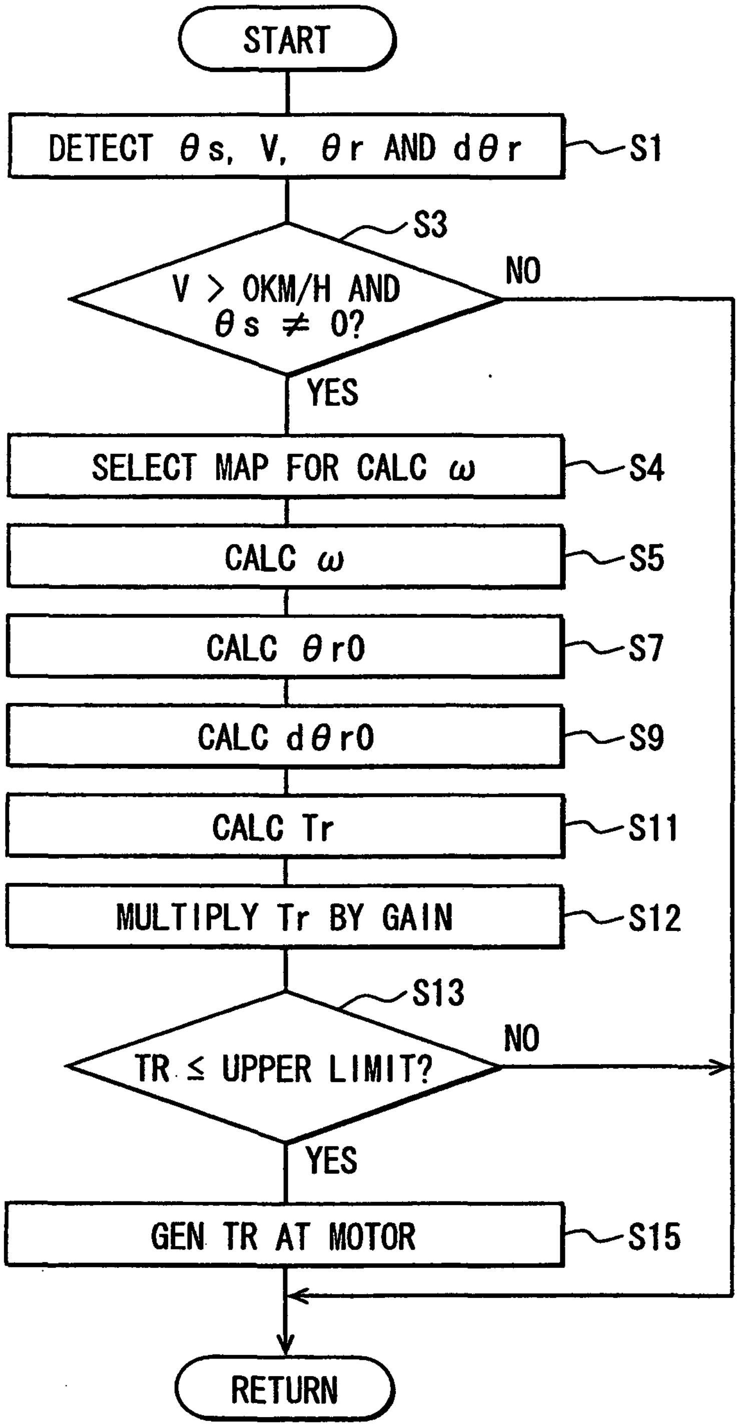
START
DETECT θs, V, θr AND dθr
S1
S3
V > 0KM/H AND θs ≠ 0?
NO
YES
SELECT MAP FOR CALC ω
S4
CALC ω
S5
CALC θr0
S7
CALC dθr0
S9
CALC Tr
S11
MULTIPLY Tr BY GAIN
S12
S13
TR ≤ UPPER LIMIT?
NO
YES
GEN TR AT MOTOR
S15
RETURN

FIG. 14

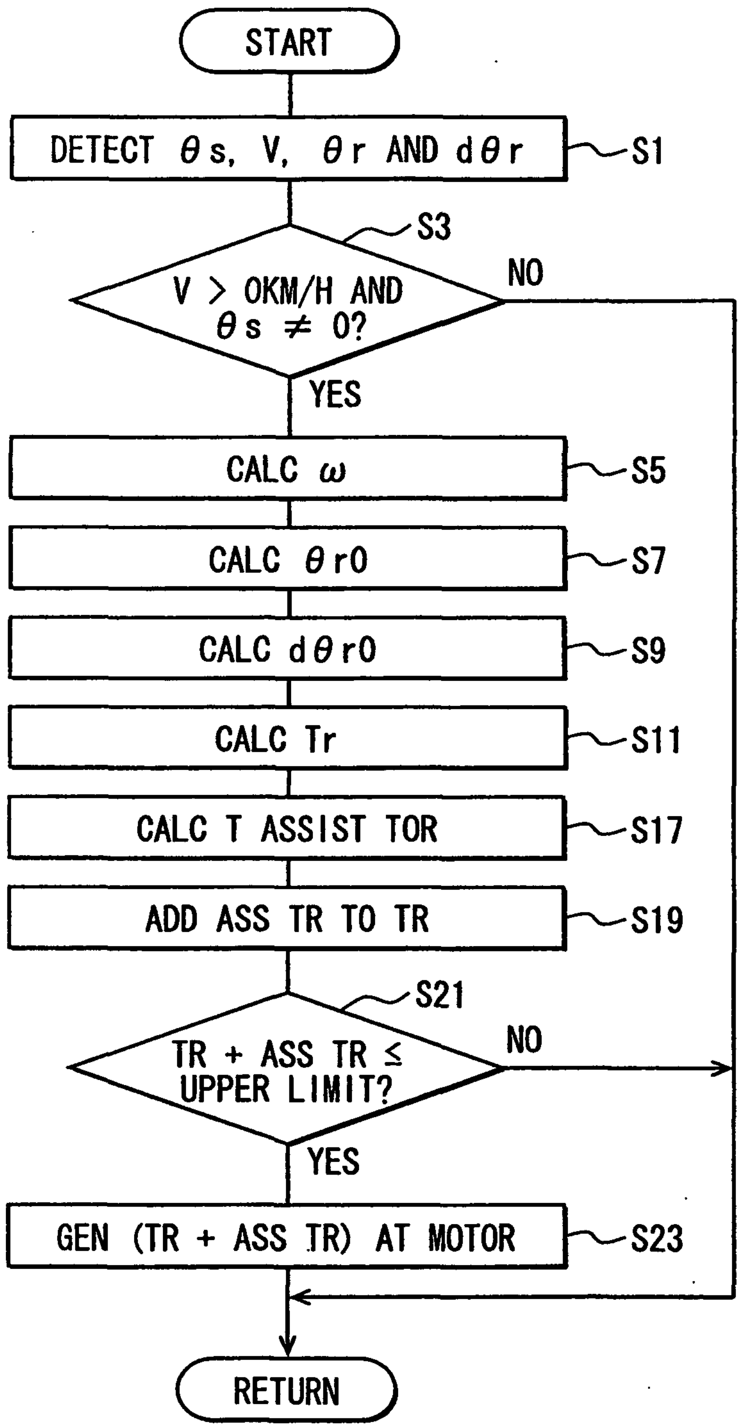
START
DETECT θs, V, θr AND dθr
S1
S3
V > 0KM/H AND θs ≠ 0?
NO
YES
CALC ω
S5
CALC θr0
S7
CALC dθr0
S9
CALC Tr
S11
CALC T ASSIST TOR
S17
ADD ASS TR TO TR
S19
S21
TR + ASS TR ≤ UPPER LIMIT?
NO
YES
GEN (TR + ASS TR) AT MOTOR
S23
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07215258 A
- WO 2010023668 A1
- JP H07309283 A